# EUROPEAN PATENT SPECIFICATION

(11) **EP 1 730 427 B1**
(45) Date of publication and mention of the grant of the patent: **20.08.2008**
(21) Application number: 05715876.8
(22) Date of filing: 09.03.2005
(51) Int. Cl.: F16J 15/08, F16J 15/28, F16J 13/02, F27B 5/06, B30B 11/00

(54) **SEALING SYSTEM FOR HIGH-PRESSURE AND HIGH-TEMPERATURE CONTAINERS**
DICHTUNGSSYSTEM FÜR HOCHDRUCK- UND HOCHTEMPERATURBEHÄLTER
SYSTEME D'ETANCHEITE DESTINE A DES CONTENANTS HAUTE PRESSION ET A TEMPERATURE ELEVEE

(30) Priority: 15.03.2004 IT TO20040169
(43) Date of publication of application: 13.12.2006
(73) Proprietor: Teksid Aluminum S.r.l., 10022 Carmagnola (Torino) (IT)
(72) Inventor: MASTROGIACOMO, Leandro, I-10078 Venaria (Torino) (IT); PANERO, Francesco, I-12040 Sanfrè (Cuneo) (IT)
(74) Representative: Rambelli, Paolo
(86) International application number: PCT/EP2005/002487
(87) International publication number: WO 2005/090836

(56) References cited:
- GB-A- 161 558
- US-A- 2 625 414
- PATENT ABSTRACTS OF JAPAN vol. 007, no. 183 (M-235), 12 August 1983 (1983-08-12) & JP 58 084903 A (KOBE SEIKOSHO KK), 21 May 1983 (1983-05-21)
- PATENT ABSTRACTS OF JAPAN vol. 012, no. 197 (M-706), 8 June 1988 (1988-06-08) & JP 63 002596 A (MITSUBISHI HEAVY IND LTD), 7 January 1988 (1988-01-07)

## Description

The present invention relates in general to the production of a sealing system for high-pressure and high-temperature containers and provides an apparatus and a method using this sealing system.

The apparatus to which the invention relates is more particularly of the type comprising:
- a container for high pressures defining a volume adapted to contain a material to be pressurised, provided with an inlet for the introduction of the material into this volume,
- a moving head adapted hermetically to close the pressurised container, and
- a piston mounted to slide in a leak-tight manner through the head and moving between a retracted position and a forward position in which it places the inner volume of the container under pressure.
Such an apparatus is disclosed in JP 58 084 903 A.
This apparatus can be used to carry out technological processes which require particular high-pressure treatments, typically at more than 1000 bar, and at high temperatures, for instance of the order of 450-550°C.

The hot isostatic pressing (HIP) process is a particular instance of these technological processes; in this process, the container contains a bath of melted salts with a low melting point, in the liquid state, which is then pressurised by means of the piston associated with the head and which acts as a means for applying pressure to a casting immersed in a bath.

In known systems, the head may move between a raised open position and a lowered position, in which the head acts as a cover directly closing the inlet of the container, through the interposition of an annular sealing member between the respective facing surfaces; in the closed position, the seal between the piston and the head adapted to ensure appropriate sliding of the piston within the head is provided by means of at least one sealing member within the head.

For this purpose, bearing in mind the high temperature which - by conduction - occurs within the head and the high pressure that it is desired to generate, it is necessary to use gaskets formed from high-performance and high-cost materials, such as graphite gaskets.

When this sealing gasket has to be replaced after its deterioration, the head has to be dismantled and the plant shut down with a substantial increase in overall process management costs.

In order to remedy the above-mentioned drawbacks, the present invention relates to a sealing apparatus of the type described above, characterised in that it comprises an auxiliary cover, which can be associated in a leak-tight manner with the inlet of the high-pressure container, in a position interposed between the container and the head, this cover being provided with an opening in which the piston can slide and coinable sealing means associated with the opening in order to provide a pressurised seal between the piston and the cover in the position in which the moving head hermetically closes the container.

The moving head in particular comprises coining means adapted to cause the coining by plastic deformation of these sealing means, in its hermetic closure position.

The invention further relates to a method using the sealing apparatus described abode, as set out in the following claims.

Further characteristic features and advantages of the apparatus and the method are set out in the accompanying claims.

The characteristic features and advantages of the apparatus and the method of the invention are set out in the following detailed description, made with reference to the accompanying drawings provided purely by way of non-limiting example, in which:

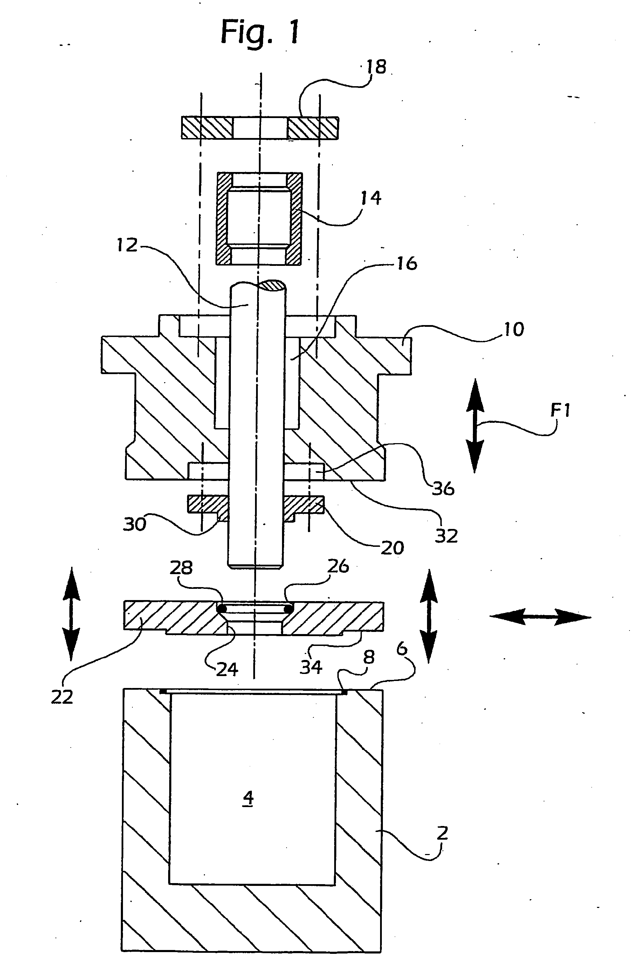

- Fig. 1 is a partially exploded section through an apparatus of the invention;
- Fig. 2 is a view in section through the apparatus of Fig. 1, in the closed configuration; and
- Fig. 3 is a view in section through a detail of the apparatus in relation to the coinable sealing means, the latter being shown before and after coining.

In the attached drawings, a high-pressure and high-temperature container of a type known per se is shown by 2 and internally contains a volume 4 adapted to contain a material to be pressurised, for instance a mass of salts of low melting point in the liquid state.

The container 2 has an upper inlet 6 whose contour is associated with a toroidal sealing gasket 8, for instance a copper gasket.

A head moving in the vertical direction F₁ is shown by 10, a piston 12 being mounted to slide in this head.

A bushing 14, inserted in a seat 16 of the head and fixed therein by means of a closure plate 18, is used to ensure appropriate sliding of the piston within the head 10.

An annular flange insert 20 provided with an axial opening in which the piston can slide is associated with a seat 36 at the lower end of the head 10, facing the container 2.

The flange insert 20 is preferably formed by a material having better properties of mechanical and thermal strength than the material forming the head.

An auxiliary annular cover 22 moving vertically and/or horizontally is shown by 22 and is able to engage the contour of the inlet 6 of the container 2 in a leak-tight manner with the assistance of the gasket 8.

The auxiliary cover 22 has an axial opening 24, in which the piston 12 slides in a leak-tight manner.

The opening 24 has a seat 26, formed for instance by a widened section of the opening 24, in which an annular sealing gasket, of coinable material, i.e. capable of plastic deformation as a result of the pressure exerted by coining means 30 associated with the head 10, can be inserted.

The coining means may in particular be formed by an annular formation 30 of the flange insert 20, which formation - in the position in which the annular insert is inserted into the seat 22 of the head 10 - projects downwards beyond the lower end surface 32 of the head and can be inserted into the coinable gasket seat 26. The coinable gasket may be formed by a copper or aluminium rod.

When the method to pressurise the container is actuated, the moving cover 22 is positioned to bear on the contour of the inlet 6 of the container 2, with a sealing gasket 8 which exerts a seal between the surface of the contour of the inlet of the container and the lower surface 34 of the cover.

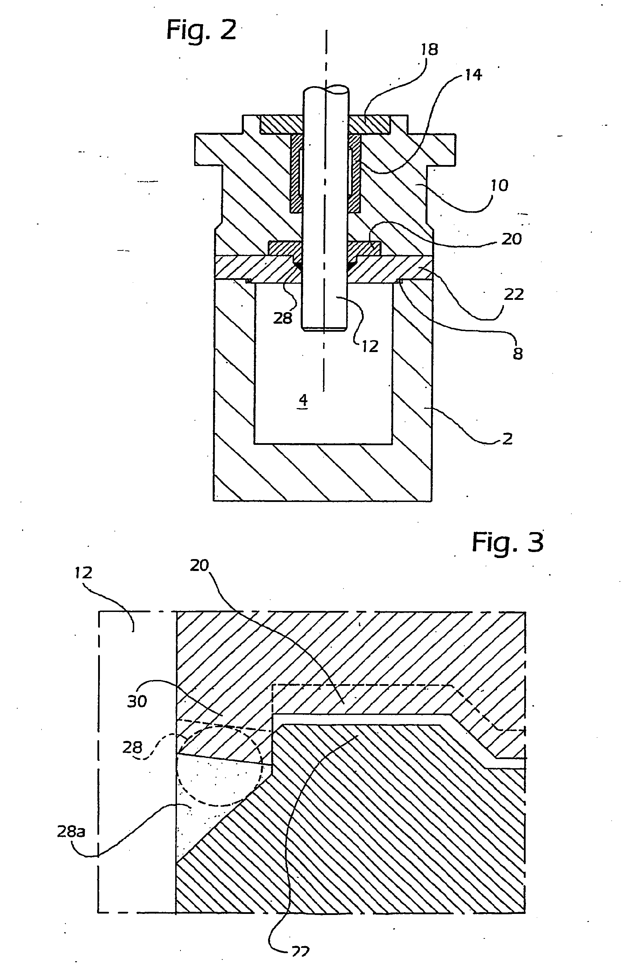

The coinable gasket 28 is inserted in the seat 26. This closes the head 10 on the cover 22, bringing the head into the closed position shown in Fig. 2.

The lowering of the head into the closed position causes the coining of the gasket 28 which is plastically deformed and assumes the deformed configuration shown by 28a in Fig. 3.

In Fig. 3, the gasket 28 and the insert 20, with the relative coining means 30, are shown in dashed lines in the position immediately preceding the beginning of coining. The position of the insert 20, after coining, and the gasket in its deformed configuration, shown by 28a, in which this gasket has assumed the shape of the seat 26, are shown in continuous lines.

In the closed position, the gasket exerts an appropriate seal both in the axial direction of the piston and in the plane at right angles to the axis of the piston. The sliding of the piston within the head is ensured both by the bushing 14 and by appropriate plays between the piston 12, the flange insert 20 and the cover 22.

At this point, the method involves the pressurisation of the volume 4 within the container 2 by means of the descent of the piston and the maintenance of the pressure for the required cycle time.

Once the high-pressure heat treatment has taken place, the subsequent stages include the operation to raise and retract the piston and the movement of the head into the open position.

The movement of the auxiliary cover 22 may therefore take place by vertical and/or lateral displacement in order to enable the insertion of a new coinable seal and a further treatment cycle.

The method and the apparatus described above make it possible to obtain substantial advantages in their industrial application.

In particular, the coined gasket makes it possible to achieve adequate pressure and temperature sealing even at pressures of more than 1000 bar and high temperatures of the order of 450-550°C or more. The gasket can be particularly rapidly replaced with no need to shut down the pressurisation process. The replacement of the gasket may in particular be masked in the cycle time.

For this purpose, it will be appreciated that it is possible to use a second auxiliary cover 22, by removing the coined gasket used in a preceding cycle and positioning a new coinable gasket during the pressing cycle time, in which a first auxiliary cover is used; this characteristic feature is particularly advantageous in hot isostatic pressing processes, in which the treatment cycle time is typically in the range of 15-40 seconds.

Moreover, coinable gasket materials which are of low cost and suitable for recycling, for instance copper or aluminium materials, can be used.

It will be appreciated that the invention is not limited to the use of these gasket materials, but also includes the use of other materials, provided that they enable conditions in which the piston may slide when coining has taken place.

## Claims

1. A sealing apparatus for high-pressure and high-temperature processes, in particular for hot isostatic pressing processes, comprising:
- a container (2) for high pressures defining a volume (4) adapted to contain a material to be pressurised and provided with an inlet (6) for the introduction of the material into said volume,
- a moving head (10) adapted hermetically to close the high-pressure container (2), and
- a piston (12) mounted to slide in a leak-tight manner through the head (10) and moving between a retracted position and a forward position in which it places the inner volume (4) of the container (2) under pressure,
**characterised in that** it comprises an auxiliary cover (22), which can be associated in a leak-tight manner with the inlet (6) of the high-pressure container (2), in a position interposed between the container (2) and the head (10), said cover (22) being provided with an opening (24) in which the piston (12) can slide and coinable sealing means (28) associated with the opening (24, 26) in order to provide a pressurised seal between the piston (12) and the auxiliary cover (22) in the position in which the moving head (10) hermetically closes the container (2).

2. An apparatus as claimed in claim 1, **characterised in that** the moving head (10) comprises coining means (20, 30) adapted to cause the plastic deformation of said sealing means (28) in its position hermetically closing the container (2).

3. An apparatus as claimed in claims 1 or 2, **characterised in that** the coining means (20, 30) comprise an annular insert (20) associated with the head (10) and having an axial opening in which the piston (12) can slide, said insert comprising, on its side facing the auxiliary cover (22), an annular end (30) adapted to engage a seat (26) provided in the opening (24) of the auxiliary cover (22) in order to enable the coining of the coinable sealing means (28) housed in the seat (26).

4. An apparatus as claimed in any one of the preceding claims, comprising a sealing gasket (8) interposed between the auxiliary cover (22) and the contour of the inlet (6) of the container (2).

5. An apparatus as claimed in any one of the preceding claims, **characterised in that** the piston (12) is mounted to slide in the head (10) via a bushing (14).

6. An apparatus as claimed in any one of the preceding claims, **characterised in that** the coinable sealing means (28) comprise an annular gasket (8) of copper or aluminium.

7. An apparatus as claimed in any one of the preceding claims, **characterised in that** the auxiliary cover (22) can move vertically and/or horizontally with respect to the container (2).

8. A high-pressure and high-temperature pressing method, using a high-pressure and high-temperature container (2) defining a volume (4) adapted to contain the material to be pressurised and provided with an inlet (6) for the introduction of the material into this volume (4) and a moving head (10) adapted to hermetically close the high-pressure container (2), provided with a piston (12) mounted to slide in a leak-tight manner through the head (10) and moving between a retracted position and a forward position in which it places the inner volume (4) of the container (2) under pressure, **characterised in that** it comprises the operations of:
- disposing an auxiliary cover (22) which may be associated in a leak-tight manner with the inlet (6) of the container (2) in a position interposed between the container (2) and the head (10), the cover (22) being provided with an opening (24) in which the piston (12) can slide in a leak-tight manner and with coinable sealing means (28) associated with said opening (24, 26),
- positioning the auxiliary cover (22) to bear on the container (2), and
- carrying out the coining in situ of these coinable sealing means (28) by actuating the moving head (10) in its position hermetically closing the container (2).

9. A method as claimed in claim 8, **characterised in that** once coining of the sealing means (28) has taken place, it further comprises the operations of:
- pressurising the inner volume (4) of the container (2) by advancing the piston (12) within said volume (4),
- maintaining the container (2) under pressure for a desired cycle time,
- depressurising the container (2) by extracting the piston (12),
- moving the head (10) into the open configuration of the container (2), and
- moving the auxiliary cover (22) in order to insert new coinable sealing means (28).

10. A method as claimed in claims 8 or 9, in which the coinable sealing means (28) are formed by a copper or aluminium gasket.

11. A sealing system for a container (2) containing a fluid at high pressure, comprising a head (10) moving between a closed position and an open position of the container (2), a piston (12) for the pressurisation of the container (2) mounted to slide within the head (10) and sealing means adapted to prevent fluid from emerging from the pressurised container (2), **characterised in that** the sealing means comprise an auxiliary cover (22) adapted to be interposed between the head (10) and the container (2), provided with an opening (24) in which the piston (12) may slide and a coinable gasket (28) associated with the opening (24) adapted after its coining to exert a sliding seal between the piston (12) and the cover (22).

## Patentansprüche

1. Dichtungsapparat für Hochdruck- und Hochtemperaturprozesse, insbesondere für heißisostatische Pressprozesse, mit:
einem Behälter (2) für hohe Drücke, der ein Volumen (4) begrenzt, das angepasst ist, um ein druckzubeaufschlagendes Material aufzunehmen, und der mit einem Einlass (6) für die Einbringung des Materials in das Volumen versehen ist,
einem beweglichen Kopf (10), der angepasst ist, um den Hochdruckbehälter (2) hermetisch abzuschließen, und
einem Kolben (12), der montiert ist, um leckagedicht durch den Kopf (10) zu gleiten, und der sich zwischen einer eingefahrenen Position und einer ausgefahrenen Position bewegt, in der er das Innenvolumen (4) des Behälters (2) unter Druck setzt,
**dadurch gekennzeichnet, dass**
das Gerät eine Hilfsabdeckung (22), die leckagedicht mit dem Einlass (6) des Hochdruckbehälters (2) verbunden werden kann, in einer Position hat, die zwischen dem Behälter (2) und dem Kopf (10) liegt, wobei die Abdeckung (22) mit einer Öffnung (24), in der der Kolben (12) gleiten kann, und mit prägbaren Dichtungseinrichtungen (28) versehen ist, die mit der Öffnung (24, 26) verbunden sind, um eine druckbeaufschlagte Dichtung zwischen dem Kolben (12) und der Hilfsabdeckung (22) in der Position vorzusehen, in der der bewegliche Kopf (10) den Behälter (2) hermetisch abschließt.

2. Apparat nach Anspruch 1, **dadurch gekennzeichnet, dass** der bewegliche Kopf (10) Prägeeinrichtungen (20, 30) hat, die angepasst sind, um die plastische Verformung der Dichtungseinrichtungen (28) in seiner Position zu bewirken, die den Behälter (2) hermetisch abschließt.

3. Apparat nach Anspruch 1 oder 2, **dadurch gekennzeichnet, dass** die Prägeeinrichtungen (20, 30) einen ringförmigen Einsatz (20) haben, der mit dem Kopf (10) verbunden ist und eine axiale Öffnung hat, in der der Kolben (12) gleiten kann, wobei der Einsatz an seiner Seite, die zu der Hilfsabdeckung (22) zugewandt ist, ein ringförmiges Ende (30) hat, das angepasst ist, um mit einem Sitz (26), der in der Öffnung (24) der Hilfsabdeckung (22) vorgesehen ist, einzugreifen, um das Prägen der prägbaren Dichtungseinrichtungen (28) zu bewirken, die an dem Sitz (26) aufgenommen sind.

4. Apparat nach einem der vorangehenden Ansprüche, der einen Dichtungsring (8) hat, der zwischen der Hilfsabdeckung (22) und der Kontur des Einlasses (6) des Behälters (2) angeordnet ist.

5. Apparat nach einem der vorangehenden Ansprüche, **dadurch gekennzeichnet, dass** der Kolben (12) montiert ist, um mittels einer Buchse (14) in dem Kopf (10) zu gleiten.

6. Apparat nach einem der vorangehenden Ansprüche, **dadurch gekennzeichnet, dass** die prägbaren Dichtungseinrichtungen (28) eine ringförmige Dichtung (8) aus Kupfer oder Aluminium haben.

7. Apparat nach einem der vorangehenden Ansprüche, **dadurch gekennzeichnet, dass** sich die Hilfsabdeckung (22) in Bezug auf den Behälter (2) vertikal und/oder horizontal bewegen kann.

8. Hochdruck- und Hochtemperaturpressverfahren, das einen Hochdruck- und Hochtemperaturbehälter (2), der ein Volumen (4) begrenzt, das angepasst ist, um druckzubeaufschlagendes Material aufzunehmen, und der mit einem Einlass (6) für die Einbringung des Materials in dieses Volumen (4) versehen ist, und einen beweglichen Kopf (10) verwendet, der angepasst ist, um den Hochdruckbehälter (2) hermetisch abzuschließen, und der mit einem Kolben (12) versehen ist, der montiert ist, um leckagedicht durch den Kopf (10) zu gleiten, und der sich zwischen einer eingefahrenen Position und einer ausgefahrenen Position bewegt, in der er das Innenvolumen (4) des Behälters (2) unter Druck setzt, **dadurch gekennzeichnet, dass** das Verfahren die folgenden Schritte aufweist:
Anordnen einer Hilfsabdeckung (22), die leckagedicht mit dem Einlass (6) des Behälters (2) verbunden werden kann, in einer Position, die zwischen dem Behälter (2) und dem Kopf (10) liegt, wobei die Abdeckung (22) mit einer Öffnung (24), in der der Kolben (12) leckagedicht gleiten kann, und mit prägbaren Dichtungseinrichtungen (28) versehen ist, die mit der Öffnung (24, 26) verbunden sind,
Positionieren der Hilfsabdeckung (22), um auf dem Behälter (2) aufzuliegen, und
Ausführen des Prägens an Ort und Stelle dieser prägbaren Dichtungseinrichtungen (28) durch Steuern des beweglichen Kopfs (10) in seine Position, die den Behälter (2) hermetisch abschließt.

9. Verfahren nach Anspruch 8, **dadurch gekennzeichnet, dass**, wenn einmal das Prägen der Dichtungseinrichtungen (28) stattgefunden hat, es weiter die folgenden Schritte aufweist:
Druckbeaufschlagen des Innenvolumens (4) des Behälters (2) durch Vorrücken des Kolbens (12) innerhalb des Volumens (4),
unter Druck Halten des Behälters (2) für eine bestimmte Zykluszeit,
Druckentlasten des Behälters (2) durch Zurückziehen des Kolbens (12),
Bewegen des Kopfs (10) in den offenen Aufbau des Behälters (2), und
Bewegen der Hilfsabdeckung (22), um neue prägbare Dichtungseinrichtungen (28) einzusetzen.

10. Verfahren nach Anspruch 8 oder 9, wobei die prägbaren Dichtungseinrichtungen (28) durch eine Kupfer- oder Aluminiumdichtung ausgebildet sind.

11. Dichtungssystem für einen Behälter (2), der ein Fluid mit hohem Druck aufnimmt, mit einem Kopf (10), der zwischen einer geschlossenen Position und einer offenen Position des Behälters (2) beweglich ist, mit einem Kolben (12) für die Druckbeaufschlagung des Behälters (2), wobei der Kolben montiert ist, um innerhalb des Kopfs (10) zu gleiten, und mit Dichtungseinrichtungen, die angepasst sind, um zu verhindern, dass ein Fluid aus dem druckbeaufschlagten Behälter (2) austritt, **dadurch gekennzeichnet, dass** die Dichtungseinrichtungen eine Hilfsabdeckung (22), die angepasst ist, um zwischen dem Kopf (10) und dem Behälter (2) angeordnet zu sein, und die mit einer Öffnung (24) versehen ist, in der der Kolben (12) gleiten kann, und eine prägbare Dichtung (28) haben, die mit der Öffnung (24) verbunden ist, und die angepasst ist, nach ihrer Prägung eine Gleitdichtung zwischen dem Kolben (12) und der Abdeckung (22) auszubilden.

## Revendications

1. Appareil d'étanchéité pour des procédés sous haute pression et haute température, en particulier pour des procédés de compression isostatique, comprenant :
- un contenant (2) destiné aux hautes pressions, définissant un volume (4) conçu pour contenir un matériau devant être comprimé et muni d'un orifice d'entrée (6) destiné à l'introduction du matériau dans ledit volume,
- une tête mobile (10) conçue pour être hermétique afin de fermer le contenant sous haute pression (2), et
- un piston (12), monté pour coulisser de manière étanche au travers de la tête (10) et se déplaçant entre une position rétractée et une position en avant dans laquelle il place le volume intérieur (4) du contenant (2) sous pression,
**caractérisé en ce qu'**il comprend un couvercle auxiliaire (22), qui peut être associé de manière étanche à l'orifice d'entrée (6) du contenant sous haute pression (2) dans une position intercalée entre le contenant (2) et la tête (10), ledit couvercle (22) étant muni d'une ouverture (24) dans laquelle peut coulisser le piston (12) et d'un moyen d'étanchéité (28) pouvant être poinçonné, associé à l'ouverture (24, 26) afin de procurer un joint pressurisé entre le piston (12) et le couvercle auxiliaire (22) dans la position dans laquelle la tête mobile (10) ferme hermétiquement le contenant (2).

2. Appareil selon la revendication 1, **caractérisé en ce que** la tête mobile (10) comprend des moyens de poinçonnage (20, 30) conçus pour provoquer la déformation plastique dudit moyen d'étanchéité (28) dans la position dans laquelle il referme hermétiquement le contenant (2).

3. Appareil selon les revendications 1 ou 2, **caractérisé en ce que** les moyens de poinçonnage (20, 30) comprennent un insert annulaire (20) associé à la tête (10) et comportant une ouverture axiale dans laquelle peut coulisser le piston (12), ledit insert comprenant, sur le côté faisant face au couvercle auxiliaire (22), une extrémité annulaire (30) conçue pour se mettre en prise avec un siège (26) ménagé dans l'ouverture (24) du couvercle auxiliaire (22) afin de permettre le poinçonnage de l'élément d'étanchéité (28) pouvant être poinçonné, logé dans le siège (26).

4. Appareil selon l'une quelconque des revendications précédentes, comprenant un joint d'étanchéité (8) intercalé entre le couvercle auxiliaire (22) et le contour de l'orifice d'entrée (6) du contenant (2).

5. Appareil selon l'une quelconque des revendications précédentes, **caractérisé en ce que** le piston (12) est monté pour coulisser dans la tête (10) par l'intermédiaire d'une douille (14).

6. Appareil selon l'une quelconque des revendications précédentes, **caractérisé en ce que** le moyen d'étanchéité (28) pouvant être poinçonné comprend un joint d'étanchéité annulaire (8) constitué de cuivre ou d'aluminium.

7. Appareil selon l'une quelconque des revendications précédentes, **caractérisé en ce que** le couvercle auxiliaire (22) peut se déplacer verticalement et/ou horizontalement par rapport au contenant (2).

8. Procédé de compression sous haute pression et haute température utilisant un contenant (2) sous haute pression et haute température définissant un volume (4), conçu pour contenir le matériau devant être comprimé, et muni d'un orifice d'entrée (6) destiné à l'introduction du matériau dans ce volume (4) ainsi que d'une tête mobile (10) conçue pour fermer hermétiquement le contenant sous haute pression (2), munie d'un piston (12) monté pour coulisser de manière étanche au travers de la tête (10) et pour se déplacer entre une position rétractée et une position en avant dans laquelle il place le volume intérieur (4) du contenant (2) sous pression, **caractérisé en ce qu'**il comprend les opérations consistant à :
- déposer un couvercle auxiliaire (22) qui peut être associé de manière étanche à l'orifice d'entrée (6) du contenant (2) selon une position intercalée entre le contenant (2) et la tête (10), le couvercle (22) étant muni d'une ouverture (24) dans laquelle peut coulisser le piston (12) de manière étanche, ainsi que d'un moyen d'étanchéité (28) pouvant être poinçonné associé à ladite ouverture (24, 26),
- positionner le couvercle auxiliaire (22) pour qu'il repose sur le contenant (2), et
- effectuer le poinçonnage in situ de ce moyen d'étanchéité (28) en actionnant la tête mobile (10) dans sa position fermant hermétiquement le contenant (2).

9. Procédé selon la revendication 8, **caractérisé en ce qu'**une fois que le poinçonnage du moyen d'étanchéité (28) a eu lieu, il comprend en outre les opérations consistant à :
- pressuriser le volume interne (4) du contenant (2) en faisant avancer le piston (12) à l'intérieur dudit volume (4),
- maintenir le contenant (2) sous pression pendant un temps de cycle désiré,
- dépressuriser le contenant (2) en extrayant le piston (12),
- déplacer la tête (10) dans la configuration ouverte du contenant (2), et
- déplacer le couvercle auxiliaire (22) afin d'insérer un nouveau moyen d'étanchéité (28) pouvant être poinçonné.

10. Procédé selon les revendications 8 ou 9, dans lequel le moyen d'étanchéité (28) pouvant être poinçonné est formé par un joint d'étanchéité en cuivre ou en aluminium

11. Système d'étanchéité pour un contenant (2) renfermant un fluide sous haute pression, comprenant une tête (10) se déplaçant entre une position fermée et une position ouverte du contenant (2), un piston (12) permettant la pressurisation du contenant (2) étant monté pour coulisser à l'intérieur de la tête (10), et un moyen d'étanchéité étant conçu pour empêcher le flux de sortir du contenant sous pression (2), **caractérisé en ce que** le moyen d'étanchéité comprend un couvercle auxiliaire (22) conçu pour être intercalé entre la tête (10) et le contenant (2), muni d'une ouverture (24) dans laquelle peut coulisser le piston (12), ainsi qu'un joint d'étanchéité (28) pouvant être poinçonné, associé à l'ouverture (24) adapté après son poinçonnage pour exercer la fonction de joint coulissant entre le piston (12) et le couvercle (22).
